# EUROPÄISCHE PATENTSCHRIFT

(11) **EP 0 383 037 B1**
(45) Veröffentlichungstag und Bekanntmachung des Hinweises auf die Patenterteilung: **15.12.1993**
(21) Anmeldenummer: 90100964.7
(22) Anmeldetag: 18.01.1990
(51) Int. Cl.: B65H 23/24, F26B 13/20

(54) **Vorrichtung zum schwebenden Führen von Materialbahnen durch gegen die Materialbahn geblasene Luft**
Device for the floating guiding of material webs by air jets aimed at the web
Dispositif pour le guidage flottant de bandes de matière avec jet d'air dirigé contre celles-ci

(30) Priorität: 17.02.1989 DE 3904774
(43) Veröffentlichungstag der Anmeldung: 22.08.1990
(73) Patentinhaber: STORK CONTIWEB B.V., 5831 AN Boxmeer (NL)
(72) Erfinder: Vits, Hilmar, W-5653 Leichlingen 1 (DE)
(74) Vertreter: Cohausz & Florack Patentanwälte

(56) Entgegenhaltungen:
- WO-A-87/03223
- DE-A- 3 130 450
- FR-A- 1 395 604
- US-A- 3 837 551
- US-A- 3 982 327

## Beschreibung

Zum schwebenden Führen von Materialbahnen haben sich in der Praxis über Jahrzehnte sogenannte Luftkissendüsen bewährt, die aus einem Blaskasten mit zwei gegenüberliegend angeordneten Ausblasschlitzen oder Reihen von Ausblasöffnungen bestehen, aus denen Luft unter spitzem Winkel gegen die Materialbahn ausgeblasen wird. Diese ausgeblasene Luft bildet zwischen den Ausblasschlitzen, einer zwischen den Ausblasschlitzen angeordneten Platte und der Materialbahn ein Luftkissen, das die Materialbahn trägt. Vorzugsweise werden solche Blaskästen oberhalb und unterhalb der Materialbahn und gegeneinander in Materialbahnlaufrichtung versetzt angeordnet. Bei dieser Anordnung wird die Materialbahn wellenförmig geführt. Eine solche wellenförmige Führung bildet sich nur bei begrenzter Bahnspannung aus und ist wegen der Be- oder Verhinderung des Kantenflatterns, das heißt, aus Gründen einer berührungssicheren Führung erwünscht.

Die Forderung nach berührungssicherem, flatterfreiem Führen der Materialbahn wird mit größer werdenden Bahnspannungen bei höheren Materialbahngeschwindigkeiten und dünneren Materialbahnen immer schwieriger. Kürzere Wellen infolge engerer Anordnung der Blaskästen führen dünnere Materialbahnen besser aber nicht mehr, wenn bei engerer Anordnung der Blaskästen das geringere Blasvolumen die Wellenhöhe kleiner werden läßt.

Aus diesem Grunde ist man schon seit langem bemüht, bessere Lösungen zu suchen.

Um stabile Führungsverhältnisse im Bereich eines Blaskastens zu erhalten, muß einerseits das einseitige Ausbrechen von Blasluft aus dem Luftkissen über einen Längsrand und andererseits das Abströmen von Blasluft aus dem zu den Bahnkanten hin offenen Luftkissen, das für das Kantenflattern verantwortlich ist, verhindert werden. Bei einer bekannten Vorrichtung (DE-PS 26 13 135) hat man deshalb den Blaskasten asymmetrisch ausgebildet, das heißt, daß die Ausblasrichtung der an einem Rand angeordneten Ausblasöffnungen steiler als diejenige der Ausblasöffnungen am anderen Rand ist. Bei dieser asymmetrischen Ausbildung des Blaskastens wird die Abströmung aus dem Luftkissen zwischen den beiden Längsrändern stets über den Rand mit den steiler angestellten Blasstrahlen begünstigt. Die Abströmung in Längsrichtung des Blaskastens mit der Neigung zum Flattern der Kanten wird verringert. Zusätzlich kann ein Abströmen aus dem Luftkissen in Längsrichtung durch über eine Perforation in einer zwischen den Ausblasöffnungen angeordneten Decke austretendes Blasmittel behindert werden.

Bei einer anderen bekannten Vorrichtung sind die gegenüberliegenden Ausblasöffnungen gegeneinander um eine halbe Teilung (Abstand zwischen den Ausblasöffnungen) versetzt. Aus den Ausblasöffnungen trifft die Blasluft unter flachem Winkel von etwa 30° auf die Materialbahn. Der gegenseitige Abstand der Ausblasöffnungen ist unter Berücksichtigung der Ausdehnung des austretenden Blasstrahls so gewählt, daß die aus gegenüberliegenden Ausblasöffnungen austretenden Blasluftstrahlen sich nur geringfügig am Rand tangieren, im wesentlichen aber aneinander vorbeiströmen. Auf diese Art und Weise wird zwar eine definierte Abströmung der Blasluft über die Längsränder des Blaskastens ohne Abströmung in Längsrichtung des Blaskastens erreicht, doch können sich keine starken Luftpolster ausbilden. Wegen des flachen Winkels, mit dem die Blasstrahlen auf die Warenbahn auftreffen, ist im Falle der Verwendung der Vorrichtung zum Trocknen der Wärmeübergang und damit die Trocknungsleistung gering (US-PS 3,837,551).

Ausgehend vom zuletzt behandelten Stand der Technik betrifft die Erfindung eine Vorrichtung zum schwebenden Führen von Materialbahnen durch gegen die Materialbahn geblasene Luft, bestehend aus mehreren quer zur Laufrichtung der Materialbahn auf einer oder beiden Seiten, insbesondere in Laufrichtung versetzt zueinander angeordneten Blaskästen, die jeweils in der der Materialbahn zugekehrten Seite zwei Reihen von gegenüberliegend und um eine halbe Teilung gegeneinander versetzten Ausblasöffnungen mit einer dazwischen liegenden Decke aufweisen, an deren der Materialbahn abgekehrten Rändern sich jeweils eine in die Decke übergehende Leitfläche anschließt und deren Blasrichtungen jeweils eine gegen die Materialbahn gerichtete Komponente und eine gegen die Ausblasöffnungen in der jeweils anderen Reihe gerichtete Komponente haben, wobei die Blasluft zwischen den Ausblasöffnungen jeweils einer Reihe abströmt.

Der Erfindung liegt die Aufgabe zugrunde, eine Vorrichtung dieser Art zu schaffen, die stärkere Luftpolster und einen höheren Wärmeübergang als die bekannte gattungsgleiche Vorrichtung hat.

Diese Aufgabe wird erfindungsgemäß dadurch gelöst, daß die Leitfläche einerseits mit der Blasrichtung einer jeden Ausblasöffnung und andererseits mit der Materialbahn solche spitzen Winkel einschließen, daß die ausgeblasene Luft von der Leitfläche ab- und derart steil gegen die Materialbahn gelenkt wird, daß die auf die Materialbahn auftreffende Luft sich nach Art einer Quellströmung in alle Richtungen ausbreitet.

Bei der erfindungsgemäßen Vorrichtung ergeben sich aufgrund der zunächst an der Leitfläche abgelenkten und dann weiter durch die Luftpolster steil gegen die Materialbahn gelenkten Blasluft starke Luftpolster, die eine große Berührungssicherheit gewährleisten. Die sich dabei einstellende Quellströmung sorgt für einen hohen Wärmeübergang. Gleichwohl kann das Blasmittel definiert nach allen Seiten, und zwar teilweise direkt über den benachbarten Rand und teilweise durch die verbleibenden Kanäle zwischen den Ausblasöffnungen der jeweils gegenüberliegenden Reihe über den anderen Rand abströmen. Das Blasmittel ist also nicht gezwungen, eine Hauptströmung in Längsrichtung des Düsenkastens zu den Materialbahnrändern hin mit der Folge zu bilden, daß es zu einem Kantenflattern kommt.

Gute Ergebnisse bezüglich der berührungssicheren Führung der Materialbahn werden erreicht, wenn die Blasrichtung mit der Materialbahn einen spitzen Winkel zwischen 15° und 45°, insbesondere 30°, einschließt. Der spitze Winkel zwischen der Leitfläche und der Blasrichtung sollte 15° bis 45°, insbesondere 30°, betragen, während der spitze Winkel zwischen der Leitfläche und der Materialbahn 40° bis 80°, insbesondere 60°, betragen sollte.

Für die Ausblasöffnungen ist ein rechteckiger Querschnitt günstig, bei dem die äußere Längsseite von einer Flanke des Blaskastens und die innere Längsseite von der Leitfläche begrenzt werden.

Nach einer weiteren Ausgestaltung der Erfindung sollten die Abstände zwischen den Ausblasöffnungen einer Reihe 35 % bis 65 %, insbesondere 50 %, der Abstände zwischen den Ausblasöffnungen der beiden gegenüberliegenden Reihen eines Blaskastens betragen.

Der Blaskasten läßt sich konstruktiv auf einfache Art und Weise dadurch verwirklichen, daß die Leitflächen von den abgewinkelten Rändern einer die Decke bildenden, im wesentlichen ebenen Muldendecke gebildet sind, die in einer zwischen den Ausblasöffnungen liegenden, einen Muldenboden aufweisende Mulde des Blaskastens eingesetzt ist und mit an den Rändern angesetzten, die Ausblasöffnungen durch- und den Muldenboden der Mulde hintergreifender Zungen an dem Muldenboden befestigt ist.

Im folgenden wird die Erfindung anhand einer ein Ausführungsbeispiel darstellenden Zeichnung näher erläutert. Im einzelnen zeigen:
- Fig. 1: eine Vorrichtung zum schwebenden Führen von Materialbahnen mittels Luft im Querschnitt und im Ausschnitt
**und**
- Fig. 2: einen Blaskasten der Vorrichtung gemäß Fig. 1 in Aufsicht.

Die Vorrichtung zum schwebenden Führen einer Materialbahn durch Luft besteht aus unterhalb einer Materialbahn 1 angeordneten Blaskästen 2,3,4 und oberhalb der Materialbahn 1 angeordneten Blaskästen 5,6. Sämtliche Blaskästen 2-6 haben den gleichen Aufbau und sind quer zur Laufrichtung der Materialbahn 1 angeordnet, wobei die unteren Blaskästen 2-4 gegenüber den oberen Blaskästen 5,6 um eine halbe Teilung (Abstand der Symmetrieebenen der Blaskästen in Materialbahnlaufrichtung) versetzt sind.

Jeder Blaskasten 2 besteht aus einem Kastenboden 7, zwei Seitenwänden 8,9, deren der Materialbahn 1 zugekehrte obere Bereiche aufeinander zugerichtete schräge Flanken 10,11 bilden, und einer zwischen den Flanken 10,11 angeordnete Mulde 12 mit einem Muldenboden 13. Die Ränder der Flanken 10,11 sind mit dem Muldenboden 13 über Stege 14,15 verbunden, in denen als längliche, rechteckige Schlitze ausgebildete Ausblasöffnungen 16-22 ausgebildet sind. In der Mulde 12 und in der Ebene der Ränder der Flanken 10,11 ist eine im wesentlichen ebene Muldendecke 24 eingesetzt, deren Ränder zur materialbahnabgewandten Seite hin abgewinkelt sind und Leitflächen 25,26 bilden. An den Rändern der Leitflächen 25,26 sitzen Zungen 27,28, die die Ausblasöffnungen 16-22 durch- und den Muldenboden 13 hintergreifen. Auf diese Art und Weise ist die Muldendecke 24 mit den Leitflächen 25,26 in der Mulde 12 fixiert.

Die Ausblasöffnungen 16-22 bilden mit der angrenzenden Flanke 10,11 einen rechten Winkel. Die Blasrichtung B einer jeden Ausblasöffnung 16-22 verläuft parallel zu der benachbarten, als Führungsfläche wirkenden Flanke 10,11 und schließt mit der zugehörigen Leitfläche 25,26 einen spitzen Winkel a2 von 15° bis 45°, insbesondere 30°, ein. Mit der Materialbahn 1 schließt die Blasrichtung B einen Winkel a1 von 15° bis 45°, insbesondere 30°, ein. Mit der Materialbahn 1 beziehungsweise mit der dazu parallel liegenden Muldendecke 24 schließt jede Leitfläche 25,26 einen Winkel a3 von 45° bis 80°, insbesondere 60°, ein.

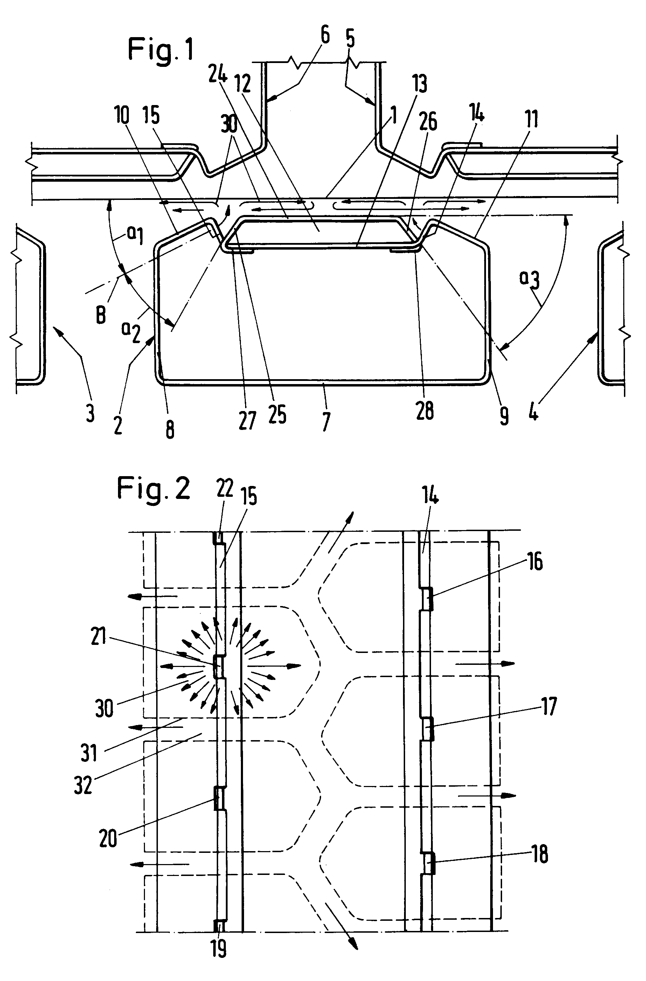

Aufgrund des besonderen Aufbaus des Blaskastens trifft die aus den Ausblasöffnungen 16-22 austretende Blasluft auf die Leitflächen 25,26, die sie in Richtung der Materialbahn 1 ablenken, wobei die Breite des Blasstrahls vergrößert wird. Die Ablenkung wird durch die Luftpolster verstärkt, so daß die Blasluft dann im wesentlichen senkrecht auf die Materialbahn 1 auftrifft und sich an dieser nach Art einer Quellströmung 30 nach allen Seiten ausbreitet, wie es in Figur 2 für die Ausblasöffnung 21 ausgeblasene Blasluft dargestellt ist. Wegen der länglichen Ausführung der Ausblasöffnungen 16-22 bilden sich zwei Hauptstrahlrichtungen senkrecht zur Längsachse des Blaskastens aus. Es entstehen einer jeden Ausblasöffnung 16-22 zugeordnete Luftpolster mit scharf konturierten Rändern 31 und dazwischen liegenden Abströmkanälen 32.

Mit der Erfindung wird erreicht, daß die Materialbahn 1 an starken Luftpolstern bei definierter Abströmung der Luft aus den Luftpolstern abgestützt ist und die Quellströmung 30 einen hohen Wärmeübergang an der Materialbahn 1 bewirkt. Die stabile Lage der Materialbahn 1 ist nicht länger von der wellenförmigen Führung abhängig, so daß dünnere Materialbahnen bei hoher Zugspannung sicher geführt werden können und eine höhere Trocknungsleistung erreicht wird, was sich positiv für die mögliche maximale Materialbahngeschwindigkeit auswirkt.

## Patentansprüche

1. Vorrichtung zum schwebenden Führen von Materialbahnen (1) durch gegen die Materialbahn (1) geblasene Luft, bestehend aus mehreren quer zur Laufrichtung der Materialbahn (1) auf einer oder beiden Seiten, insbesondere in Laufrichtung versetzt zueinander angeordneten Blaskästen (2-6), die jeweils in der der Materialbahn zugekehrten Seite zwei Reihen von gegenüberliegend und um eine halbe Teilung gegeneinander versetzten Ausblasöffnungen (16-22) mit einer dazwischen liegenden Decke (24) aufweisen, an deren der Materialbahn (1) abgekehrten Rändern sich jeweils eine in die Decke (24) übergehende Leitfläche (25,26) anschließt und deren Blasrichtungen (B) jeweils eine gegen die Materialbahn (1) gerichtete Komponente und eine gegen die Ausblasöffnungen (16-22) in der jeweils anderen Reihe gerichtete Komponente haben, wobei die Blasluft zwischen den Ausblasöffnungen (16-22) jeweils einer Reihe abströmt,
**dadurch gekennzeichnet,** daß die Leitfläche (25,26) einerseits mit der Blasrichtung (B) einer jeden Ausblasöffnung (16-22) und andererseits mit der Materialbahn (1) solche spitzen Winkel (a2, bzw. a3) einschließen, daß die ausgeblasene Luft von der Leitfläche (25,26) ab- und derart steil gegen die Materialbahn (1) gelenkt wird, daß die auf die Materialbahn (1) auftreffende Luft sich nach Art einer Quellströmung (30) in alle Richtungen ausbreitet.

2. Vorrichtung nach Anspruch 1,
**dadurch gekennzeichnet,** daß die Blasrichtung (B) mit der Materialbahn (1) einen spitzen Winkel (a1) zwischen 15° und 45°, insbesondere 30°, einschließt.

3. Vorrichtung nach Anspruch 1 oder 2,
**dadurch gekennzeichnet,** daß der spitze Winkel (a2) zwischen der Leitfläche (25,26) und der Blasrichtung (B) 15° bis 45°, insbesondere 30°, beträgt.

4. Vorrichtung nach einem der Ansprüche 1 bis 3,
**dadurch gekennzeichnet,** daß der spitze Winkel (a3) zwischen der Leitfläche (25,26) und der Materialbahn (1) 40° bis 80°, insbesondere 60°, beträgt.

5. Vorrichtung nach einem der Ansprüche 1 bis 4,
**dadurch gekennzeichnet,** daß die Ausblasöffnungen (16-22) einen rechteckigen Querschnitt haben, deren äußere Längsseite von einer Flanke (10,11) des Blaskastens (2) und deren innere Längsseite von der Leitfläche (25,26) begrenzt ist.

6. Vorrichtung nach einem der Ansprüche 1 bis 5,
**dadurch gekennzeichnet,** daß die Abstände zwischen den Ausblasöffnungen (16-22) einer Reihe 35 % bis 65 %, insbesondere 50 %, der Abstände zwischen den Ausblasöffnungen (16-22) der beiden gegenüberliegenden Reihen eines Blaskastens (2) betragen.

7. Vorrichtung nach einem der Ansprüche 1 bis 6,
**dadurch gekennzeichnet,** daß die Leitflächen (25,26) von den abgewinkelten Rändern einer die Decke (24) bildenden, im wesentlichen ebenen Muldendecke (24) gebildet sind, die in einer zwischen den Ausblasöffnungen (16-22) gebildeten, einen Muldenboden (13) aufweisenden Mulde (12) des Blaskastens (2-6) eingesetzt ist und mit an den Rändern angesetzten, die Ausblasöffnungen (16-22) durchgreifenden und den Muldenboden (13) hintergreifenden Zungen (27,28) an dem Muldenboden (13) befestigt ist.

## Claims

1. An apparatus for the floatable guiding of webs (1) by air blown against the web, comprising a number of blowing boxes (2-6) which are disposed transversely of the direction of travel of the web (1) on one or both sides and are offset in relation to one another, more particularly in the direction of travel, and each of which has on the side adjacent the web of material two rows of opposite blowing apertures (16-22) offset in relation to one another by half a pitch with an interposed cover (24), whose edges remote from the web (1) of material are each adjoined by a deflecting surface (25, 26) merging into the cover (24) and whose blowing directions (B) each have a component directed against the web (1) of material and a component directed against the blowing apertures (16-22) in the other row, the blown air flowing off between the blowing apertures (16-22) of each row, characterized in that the deflecting surfaces (25, 26) enclose an acute angle (a1) with the blowing direction (B) of each blowing aperture (16-22) on the one hand and an acute angle (a2) with the web (1) of material on the other, such that the blown air is deflected away from the deflecting surface (25, 26) and so steeply against the web (1) of material that the air impinging on the web (1) spreads out in all directions after the fashion of a source flow (30).

2. An apparatus according to claim 1, characterized in that the blowing direction (B) encloses an acute angle (a1) between 15° and 45°, more particularly 30°, with the web (1) of material.

3. An apparatus according to claims 1 or 2, characterized in that the acute angle (a2) between the deflecting surface (25, 26) and the blowing direction (B) is 15° to 45°, more particularly 30°.

4. An apparatus according to one of claims 1 to 3, characterized in that the acute angle (a3) between the deflecting surface (25, 26) and the web (1) of material is 40° to 80°, more particularly 60°.

5. An apparatus according to one of claims 1 to 4, characterized in that the blowing apertures (16-22) have a rectangular crosssection, their outer longitudinal side being bounded by a flank (10, 11) of the blowing box (2) and their inner longitudinal side being bounded by the deflecting surface (25, 26).

6. An apparatus according to one of claims 1 to 5, characterized in that the distances between the blowing apertures (16-22) of a row are 35% to 65% more particularly 50%, of the distances between the blowing apertures (16-22) of the two opposite rows of a blowing box (2).

7. An apparatus according to one of claims 1 to 6, characterized in that the deflecting surfaces (25, 26) are formed by the downwardly bent edges of a substantially flat depression cover (24) which is inserted in a depression (12) of the blowing box (2-5), formed between the blowing apertures (16-22) and having a bottom (13), and is attached to said bottom (13) of the depression via tongues (27, 28) which are formed at the edges, extend through the blowing apertures (16-22) and engage behind the bottom (13) of the depression.

## Revendications

1. Dispositif permettant d'acheminer en suspension des bandes de matière (1) par de l'air soufflé contre la bande de matière (1), le dispositif étant constitué de plusieurs boîtes de soufflage (2-6) agencées transversalement à la direction de défilement de la bande de matière (1) sur un et/ou deux côtés, en particulier décalées l'une de l'autre dans la direction de défilement, ces boîtes de soufflage (2-6) présentant respectivement sur la face tournée vers la bande de matière deux rangées d'ouvertures de soufflage (16-22) en regard l'une de l'autre et décalées l'une de l'autre d'une demi-division avec un couvercle intermédiaire (24), sur les bords opposés à la bande de matière (1) des quelles se raccorde respectivement une surface directrice (25, 26) qui se fond dans le couvercle (24) et dont les directions de soufflage (B) ont respectivement une composante dirigée vers la bande de matière (1) et une composante dirigée vers les ouvertures de soufflage (16-22) de l'autre rangée respective, l'air de soufflage s'échappant entre les ouvertures de soufflage (16-22) respectives d'une rangée, caractérisé en ce que la surface directrice (25, 26) forme, d'une part, avec la direction de soufflage (B) de chaque ouverture de soufflage (16-22) et, d'autre part, avec la bande de matière (1) un angle aigu (a2 ou a3) tel que l'air soufflé soit dévié par la surface directrice (25, 26) vers le bas et en pente raide vers la bande de matière (1) si bien que l'air tombant sur la bande de matière (1) s'étale à la manière d'un écoulement source dans toutes les directions.

2. Dispositif selon la revendication 1, caractérisé en ce que la direction de soufflage (B) fait avec la bande de matière (1) un angle aigu (a1) entre 15 et 45°, en particulier 30°.

3. Dispositif selon la revendication 1 ou 2, caractérisé en ce que l'angle aigu (a2) entre les surfaces directrices (25, 26) et la direction de soufflage (B) est de 15 à 45°, en particulier de 30°.

4. Dispositif selon l'une quelconque des revendications 1 à 3, caractérisé en ce que l'angle aigu (a3) entre les surfaces directrices (25, 26) et la bande de matière (1) est de 40 à 80°, en particulier de 60°.

5. Dispositif selon l'une quelconque des revendications 1 à 4, caractérisé en ce que les ouvertures de soufflage (16-22) ont une section transversale rectangulaire dont le côté longitudinal externe est limité par un flanc (10, 11) de la boîte de soufflage (2) et le côté longitudinal interne par la surface directrice(25, 26).

6. Dispositif selon l'une quelconque des revendications 1 à 5, caractérisé en ce que les écarts entre les ouvertures de soufflage (16-22) d'une rangée sont de 35 à 65 %, en particulier de 50 %, des écarts entre les ouvertures de soufflage (16-22) des deux rangées en regard d'une boîte de soufflage (2).

7. Dispositif selon l'une quelconque des revendications 1 à 6, caractérisé en ce que les surfaces directrices (25, 26) sont formées par les bords repliés d'un couvercle en forme d'auge (24) sensiblement plat qui forme le couvercle (24) précité, couvercle qui est inséré dans une auge (12) de la boîte de soufflage (2-6) agencée entre les ouvertures de soufflage (16-22) et présentant un fond (13) et est fixé au fond de l'auge (13) par des languettes (27, 28) appliquées sur les bords et s'engageant à travers les ouvertures de soufflage (16-22) et derrière le fond de l'auge (13).
